# EUROPÄISCHE PATENTANMELDUNG

(11) **EP 0 867 584 A2**
(43) Veröffentlichungstag der Anmeldung: **30.09.1998**
(21) Anmeldenummer: 98105500.7
(22) Anmeldetag: 26.03.1998
(51) Int. Cl.: E05D 3/02, E05D 5/02, H02B 1/38

(54) **Anordnung zur Befestigung einer Tür an einem Korpus mittels Scharnier**

(30) Priorität: 26.03.1997 DE 29705468 U; 06.06.1997 DE 29709914 U
(71) Anmelder: Klein, Jürgen, 52159 Roetgen (DE)
(72) Erfinder: Klein, Jürgen, 52159 Roetgen (DE)
(74) Vertreter: Müller-Gerbes, Margot, Dipl.-Ing.

(57) **Zusammenfassung**

Die Erfindung betrifft eine Anordnung zur Befestigung einer Tür (1) an einem Korpus (2), umfassend ein am Korpus befestigbares korpusseitiges Scharnierteil (3,3a) und mindestens ein an der Tür befestigbares türblattseitiges Scharnierteil (4), die über einen Scharnierzapfen (5) schwenkbar miteinander verbindbar sind, wobei das korpusseitige Scharnierteil (3,3a) federnd am Korpus befestigt ist.

## Beschreibung

Die Erfindung betrifft eine Anordnung zur Befestigung einer Tür zum Verschließen einer Öffnung an einem Korpus, insbesondere einem Gehäuse aus Metallblechen, vorzugsweise Edelstahlblechen, mittels mindestens eines Scharnieres, das einen am Korpus befestigbaren korpusseiten Scharnierteil und mindestens einen an der Tür befestigbaren türblattseitigen Scharnierteil aufweist, die über einen Scharnierzapfen schwenkbar miteinander verbindbar sind.

Bei metallischen Gehäusen, wie Schaltschränken oder Gehäusen, die zum Einsatz in der lebensmittelverarbeitenden Industrie, Gastronomie, Chemie, Pharmazie eingesetzt werden, kommt es auf höchste Dichtigkeit der Türen und äußerste Sauberkeit an. In der Industrie wird daher die Sauberkeit durch Reinigen mit Hochdruckreinigern erreicht. Hierfür sind solchen Hochdruckreinigern ausgesetzte Gehäuse, Schränke, Schaltschränke üblicherweise aus Edelstahlblechen ausgeführt und müssen gegen das Eindringen von gefährlichen Teilchen, festen Fremdkörpern und Wasser einen hohen Schutzwiderstand aufweisen. Diese Prüfkriterien sind in DIN VDE 0470, Teil 1, 11.92 Schutzarten für Gehäuse (IP-Code), EN 60529-1991 und DIN 400 50, Teil 9 - 05.93 festgelegt. Für Schaltschränke wird eine Dichtigkeit nach mindestens IP 66 mit einer Wasserstrahldruckbelastung von 1 bar gefordert.

Bei allen diesen Gehäusen und Schaltschränken ist es bisher unvermeidlich, daß zwischen dem Korpus und der Tür ein Spalt verbleibt, um die am Korpus befestigte Tür ungehindert öffnen zu können. Dieser äußere zur Öffnung benötigte Spalt bestimmt den erreichbaren Schutz gegen das Eindringen von Wasser und Fremdkörpern.

Dieser Spalt zwischen Türblatt und Korpus ist bei vielen Anwendungen nachteilig. Während er beispielsweise in der Lebensmittelindustrie aus Hygienegründen unerwünscht ist, gibt dieser Spalt bei der Schutzartprüfung für elektrische Schaltschränke die Gehäusedichtung den Belastungen, zum Beispiel Spritz- und Strahlwasser u.a. frei, d.h. Feuchtigkeit kann ins Innere des Schaltschrankes gelangen und dort zu Störungen der untergebrachten elektrischen Bauteile führen.

Darüber hinaus stellt der Spalt zwischen Türblatt und Korpus auf dem Gebiet der elektromagnetischen Verträglichkeit (EMV) einen freien Durchgang für Strahlung dar, was ebenfalls sehr nachteilig ist. Weiterhin ermöglicht der Spalt das Ansetzen eines Hebels, so daß mutwillige Zerstörungen leicht durchgeführt werden können.

Im Rahmen der Erfindung soll daher eine Anordnung zur Befestigung einer Tür an einem Korpus vorgeschlagen werden, das den bisher notwendigen Spalt zwischen Türblatt und Korpus in geschlossenem Zustand des Türblattes vermeidet und einen erhöhten Schutz und Dichtigkeit gegen das Eindringen von Fremdkörpern und Wasser bietet.

Dies wird erfindungsgemäß durch Ausbildung der gattungsgemäßen Anordnung gemäß den kennzeichnenden Merkmale des Patentanspruches 1 gelöst. Die Erfindung schlägt vor, daß das korpusseitige Scharnierteil federnd am Korpus befestigt ist. Ein wesentliches Merkmal der Erfindung besteht darin, daß das korpusseitige Scharnierteil gegen die Rückstellkraft der Federkraft der federnden Befestigung translatorisch beweglich ist und beim Öffnen der Tür vom Korpus um einen Bewegungsspalt abhebbar ist. Auf diese Weise ist es möglich geworden, daß die Tür unmittelbar, d.h. spaltfrei, am Korpus anliegen kann und beim Öffnen der Tür der bisher durch den Spalt bewirkte notwendige Freiraum zwischen Korpus und Tür durch die translatorische Beweglichkeit des korpusseitigen Scharnierteiles hergestellt wird.

Die erfindungsgemäße Anordnung ist bevorzugt bei Gehäusen anwendbar, bei denen die Tür entlang ihres Umfanges einen gegenüber der Türblattfläche rechtwinklig auf den Korpus weisenden abgewinkelten Türschenkel aufweist und der Korpus an seiner der Tür zugewandten die mittels der Tür zu verschließende Öffnung bildenden Seite einen parallel zur Tür verlaufenden Montagefalz aufweist, an dessen freien Ende sich ein in Richtung auf die Tür abgewinkelter Dichtschenkel anschließt und in dem zwischen Montagefalz, Dichtschenkel und dem Türschenkel gebildeten Eckbereich eine Hohlkammer zur Aufnahme der Scharnierteile gebildet ist.

Erfindungsgemäß werden eine erste äußere mechanische Barriere gegen das Eindringen von Fremdkörpern und Wasser und eine zweite innere abdichtende Barriere, d.h. eine Barriere mit Dichtwirkung gegen Wasser, Staub, Feuchtigkeit im Bereich der am Korpus mittels Scharnieren angeschlagenen Tür geschaffen.

Hierbei wird erfindungsgemäß vorgeschlagen, daß an der Innenseite des Türblattes ein elastisches Dichtband aufgebracht ist, in das der Dichtschenkel im geschlossenen Zustand der Tür unter Ausübung eines Anpreßdruskes eingreift, wodurch eine staub- und flüssigkeitsdichte innere dichtende Barriere geschaffen ist.

Zur Ausbildung der äußeren Barriere wird erfindungsgemäß vorgeschlagen, daß der in Richtung auf den Korpus abgewinkelte äußere Türschenkel der Tür so lang ausgebildet ist, daß der Schenkel im geschlossenen Zustand der Tür unmittelbar und spaltlos mit seinem vorderen Ende an den Montagefalz des Korpus anschließt, wodurch eine äußere mechanische Barriere gegen Eindringen von Schmutz und Feuchtigkeitspartikeln von außen in die Hohlkammer zwischen Tür und Korpus verhindert ist.

Vorteilhafte Ausgestaltungen der Erfindung sind den Unteransprüchen entnehmbar.

Eine vorteilhafte Ausführungsform der Erfindung sieht vor, daß das korpusseitige Scharnierteil entlang einer senkrecht zur Mittelachse des Scharnierzapfens verlaufenden Achse federnd befestigt ist, wodurch eine besonders einfache und platzsparende Konstruktion des erfindungsgemäßen Scharniers möglich wird, was nachfolgend noch näher erläutert wird.

Vorteilhaft ist zur federnden Befestigung des korpusseitigen Scharnierteils eine Feder vorgesehen. Die Feder kann gemäß einer Ausführungsform der Erfindung als Schraubenfeder oder gemäß einer weiteren Ausführungsform der Erfindung als Blattfeder ausgebildet sein. Es können jedoch im Rahmen der Erfindung auch mehrere Federn vorgesehen werden, wie es auch möglich ist, andere Federarten, wie Tellerfedern, Spiralfedern oder elastische Puffer und dergleichen mehr, vorzusehen.

In weiterer Ausgestaltung der Erfindung wird vorgeschlagen, daß das korpusseitige Scharnierteil längs einer Achse E, ausgehend von seiner als Anlagefläche am Korpus dienenden Seite, eine mit einem Gewinde versehene Sacklochbohrung aufweist, in die ein Gewindebolzen einseitig eingeschraubt ist und der Gewindebolzen durch eine Öffnung im Korpus hindurchführbar ist und am freien Ende des Gewindebolzens zwischen einer auf das freie Ende aufschraubbaren Mutter und dem Korpus die Feder für die federnde Befestigung des korpusseitigen Scharnierteiles angeordnet ist. Ein derart ausgebildetes erfindungsgemäßes Scharnier läßt sich nicht nur aus wenigen Einzelteilen preiswert herstellen und einfach montieren, es bietet darüber hinaus auch die Möglichkeit, durch Veränderung der Position der auf das freie Ende des Gewindebolzens aufgeschraubten Mutter den Abstand zwischen dieser und dem Korpus zu verändern, so daß die Vorspannung der zwischen Mutter und Korpus angeordneten Feder für eine korrekte Funktion des erfindungsgemäßen Scharniers variiert werden kann. Des weiteren wird vorgeschlagen, die Feder am Korpus abgedichtet zu führen, beispielsweise unter Zwischenlage einer Dichtung und einer Unterlegscheibe.

Insbesondere ist es im Rahmen der Erfindung auch möglich, an sich bekannte und handelsübliche Scharniere in der erfindungsgemäßen Anordnung einzusetzen und federnd am Korpus zu befestigen, um den bisher unvermeidlichen Spalt zwischen Türblatt und Korpus zu vermeiden.

Vorteilhaft ist das korpusseitige Scharnierteil in eine entsprechende Ausnehmung der Tür einpaßbar, so daß im geschlossenen Zustand der Tür diese bündig mit dem korpusseitigen Scharnierteil abschließt, was optisch vorteilhaft ist und das Ansetzen von Hebelwerkzeugen und dergleichen erschwert. Gleichzeitig wird die unmittelbare, d.h. spaltfreie Anlage der Tür am Korpus ermöglicht und durch entsprechende Einstellung der Vorspannung der Feder ist darüber hinaus in Grenzen auch ein Anpreßdruck des Türblattes auf dem Korpus bei geschlossenem Türblatt erzeugbar.

Gemäß einer weiteren vorteilhaften Ausführungsform der Erfindung ist es auch möglich, daß das Scharnier von der Außenseite des Korpus her nicht sichtbar zwischen diesem und der Tür angeordnet ist. Hierbei wird das Scharnier in der in dem Falzbereich des Korpus zwischen diesem und der Tür bzw. dem Türschenkel ausgebildeten Hohlkammer untergebracht. Auch bei dieser erfindungsgemäßen federnden Befestigung des Scharniers kommt die Tür im geschlossenen Zustand spaltfrei auf dem Korpus zur Anlage und das Scharnier ist außerdem von außen nicht sichtbar, d.h. der Türschenkel liegt durchgehend am Montagefalz des Korpus auf.

Die erfindungsgemäße Anordnung zur Befestigung der Tür am Korpus führt zu zwei von außen nach innen aufeinanderfolgenden Barrieren, nämlich der äußeren mechanischen Barriere durch spaltloses Schließen der Tür im Bereich des spaltlosen Aufsetzens des Türschenkels auf dem Korpus bzw. dessen Montagefalz und der inneren abdichtenden Barriere mittels Dichtschenkel und Dichtband. Die äußere mechanische Barriere wird durch die erfindungsgemäße federnde Befestigung des Scharnieres erreicht, wobei eine Tür üblicherweise mit zwei bis drei Scharnieren ausgestattet ist.

Die erfindungsgemäße Ausrüstung und Befestigung der Tür am Korpus führt zu einer wesentlichen Erhöhung des Schutzes und Schutzwiderstandes gegen äußere Belastungen und Eindringen von Fremdkörpern und wasser. Es werden bei der Prüfung mit Wasser die Anforderungen der IP 69 K erreicht, wobei mit einer Wasserstrahldruckbelastung von 100 bar gearbeitet wird. Die besten Ergebnisse werden bei Gehäusen von nicht lackierten Metallen, insbesondere Edelstahlblechen, erzielt.

Die Erfindung wird nachfolgend anhand von Ausführungsbeispielen in der Zeichnung näher erläutert. Es zeigen
- Fig. 1: in perspektivischer Darstellung die Anordnung des Scharniers bei geschlossener Tür in der Außenansicht
- Fig. 2: in perspektivischer Darstellung das korpusseitige Scharnierteil gemäß Fig. 1 und 4
- Fig. 3: in perspektivischer Darstellung das türblattseitige Scharnierteil gemäß Fig. 1 und 4
- Fig. 4: Schnittdarstellung AA gemäß Fig. 1 auf eine erfindungsgemäße Befestigung eines Scharniers zwischen einer Tür und einem Korpus
- Fig. 5a-c: in zeitlicher Abfolge das Öffnen des mittels der erfindungsgemäßen Scharniers am Korpus angeschlagenen Tür gemäß Fig. 1 und 4
- Fig. 6a-c: in zeitlicher Abfolge das Öffnen einer mit einer weiteren Ausführungsform des erfindungsgemäßen Scharniers am Korpus angeschlagenen Tür
- Fig. 7a: in der Schnittdarstellung eine Aufsicht auf eine weitere Ausführungsform eines erfindungsgemäßen Scharniers
- Fig. 7b: die Ansicht des erfindungsgemäßen Scharniers gemäß Pfeil V1 in Fig. 7a
- Fig. 7c: die Seitenansicht des erfindungsgemäßen Scharniers gemäß Pfeil V2 in Fig. 7a.

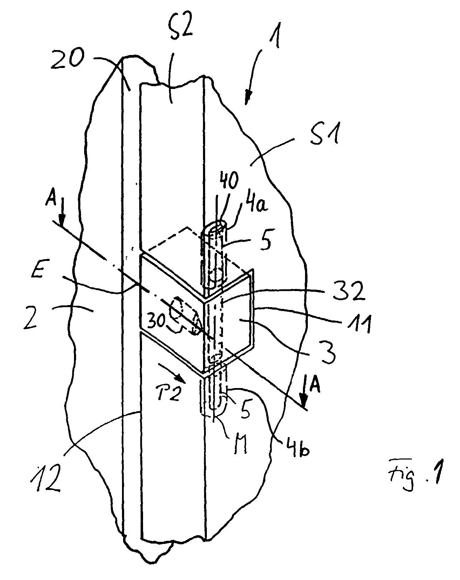

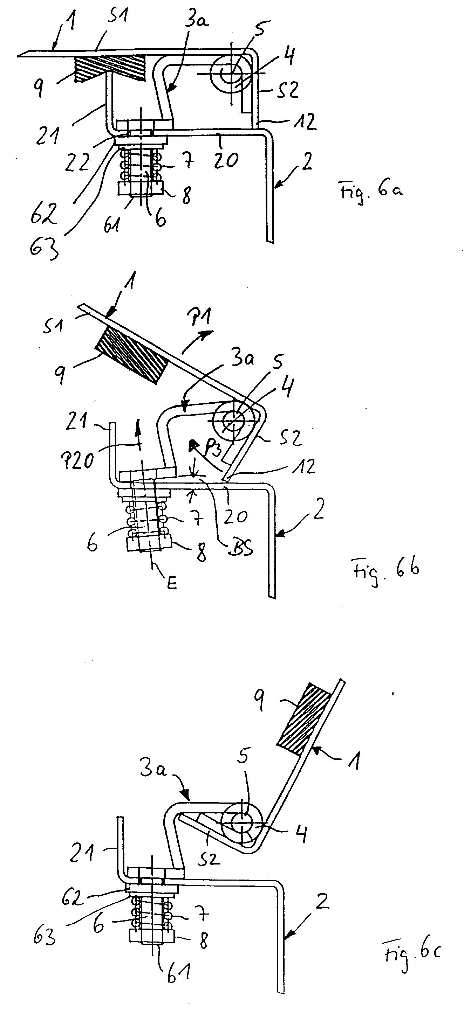

In den Fig. 1, 4 ist auszugsweise die Befestigung einer Tür 1 an einem Korpus 2, beispielsweise einem Schaltschrank, mittels eines Scharniers zum Verschließen der Öffnung F dargestellt.

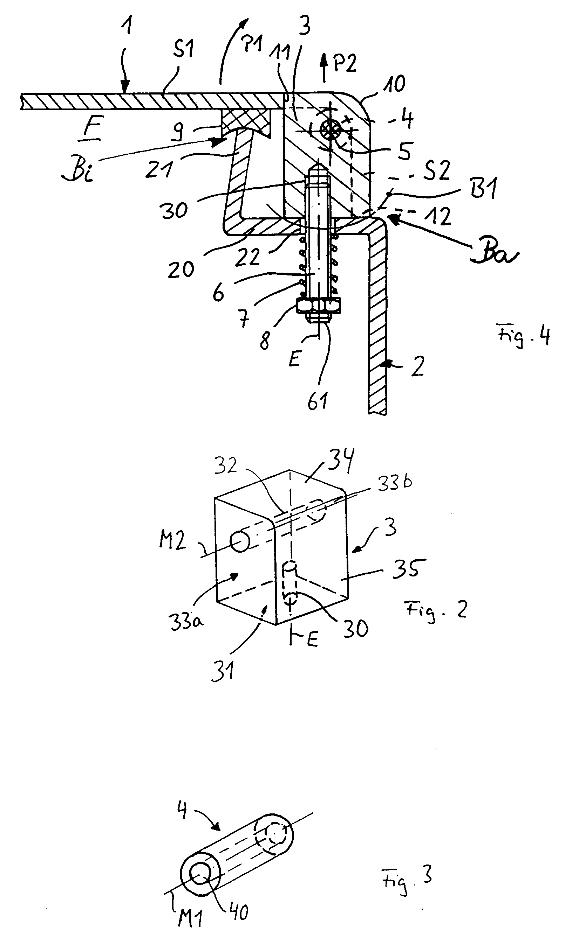

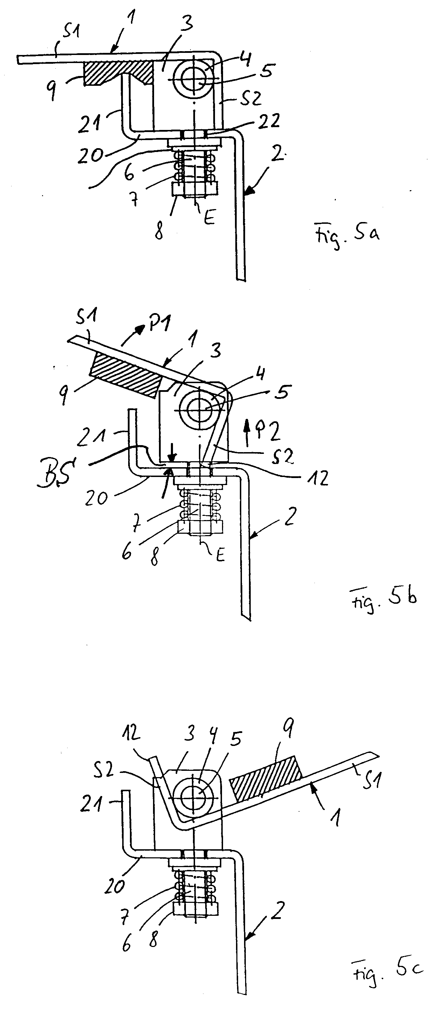

Das Scharnier enthält ein korpusseitiges Scharnierteil 3, siehe Fig. 2, welches am Korpus 2 befestigt wird, und zwei türblattseitige Scharnierteile 4, siehe Fig. 3, die am Türblatt 1 mit Abstand voneinander befestigt werden, so daß das korpusseitige Scharnierteil 3 zwischen diesen einpaßbar ist und alle Teile über einen gemeinsamen Scharnierzapfen 5 schwenkbar miteinander verbunden sind.

Das korpusseitige Scharnierteil 3 hat eine etwa quaderförmige Gestalt und weist, ausgehend von einer als Anlagefläche 31 zum Korpus 2 dienenden Seite, eine mit einem Gewinde versehene Sacklochbohrung 30 auf, die der Befestigung am Korpus 2 dient. Angrenzend an diese als Anlagefläche 31 dienende Seite des korpusseitigen Scharnierteiles 3 sind zwei parallel angeordnete als Anschlußflächen 33a, 33b für die Scharnierteile 4 dienende Seiten ausgebildet, die über eine Durchgangsbohrung 32 miteinander verbunden sind. Das korpusseitige Scharnierteil 3 kann nun in eine Ausnehmung 11 der Tür, siehe Fig. 1 und 4, eingesetzt werden, wobei seine Korpusflächen 34, 35 Außenflächen der Tür im Bereich der Ausnehmung 11 bilden.

Auch die in der Fig. 3 dargestellten türblattseitigen Scharnierteile 4 weisen eine der Durchgangsbohrung 32 des korpusseitigen Scharnierteiles 3 entsprechende Durchgangsbohrung 40 auf, so daß beim Aneinanderfügen der türblattseitigen Scharnierteile 4 an die Anschlußflächen 33a,b des korpusseitigen Scharnierteiles 3 diese Durchgangsbohrungen 40, 32 miteinander fluchtend kommunizieren und eine gemeinsame Mittelachse M aufweisen. Wie der Fig. 1 entnehmbar, kann durch diese miteinander kommunizierenden Durchgangsbohrungen 40, 32 ein gemeinsamer Scharnierstift 5 als Scharnierzapfen durchgetrieben werden, so daß die schwenkbare Verbindung zwischen dem korpusseitigen Scharnierteil 3 und den türblattseitigen Scharnierteilen bewirkt ist.

Die Befestigung der türblattseitigen Scharnierteile 4 an der Tür 1 erfolgt beispielsweise durch Schweißen. Wie in Fig. 4 ersichtlich, ist im dort dargestellten Ausführungsbeispiel die Tür 1 entlang ihres Umfanges mit einem gegenüber der Türblattfläche S1 etwa rechtwinklig in Richtung auf den Korpus 2 abgewinkelten Türschenkel S2 versehen, wobei der Übergang 10 aus der Fläche S1 in den Schenkel S2 aus umformtechnischen Gründen mit einem Radius versehen ist. Entsprechend diesem Übergangsradius im Bereich 10 ist das türblattseitige Scharnierteil 4 als zylindrischer Körper mit einem dem Übergang 10 entsprechenden Radius ausgebildet, so daß sich in den Eckbereich zwischen der Fläche S1 und dem Schenkel S2 der Tür 1 einlegen und dort gut verschweißen läßt.

Die Ausnehmung 11, in die das Scharnierteil 3 eingepaßt wird, verläuft über die Kante zwischen dem Türblatt S1 und dem abgewinkelten Türschenkel S2. Der Korpus weist an seiner der Tür 1 zugewandten Vorderseite einen im wesentlichen parallel zur Türblattfläche S1 verlaufenden Montagefalz 20 auf, an dessen freiem Ende sich ein in Richtung auf die Tür 1 abgewinkelter Dichtfalz 21 anschließt. Der Dichtfalz 21 bildet zusammen mit einem auf der Innenseite der Tür 1 aufgebrachtem elastischem Dichtungsband 9 im geschlossenen Zustand der Tür eine sogenannte Messerkantendichtung. Der von dem Türblatt S1 und dem Türschenkel S2 der Tür 1 gebildete Eckbereich sowie der von dem Montagefalz 20 und dem Dichtfalz 21 des Korpus gebildete Eckbereich bilden gemeinsam eine umlaufende Hohlkammer zur Aufnahme der Scharniere. Der Montagefalz 20 ist mit einer der Anzahl der Scharniere entsprechenden Anzahl von Durchgangsbohrungen 22 zur Befestigung des korpusseitigen Scharnierteiles ausgebildet.

Zur Befestigung des korpusseitigen Scharnierteiles 3 wird in die mit einem Gewinde versehene Sacklochbohrung 30 des korpusseitigen Scharnierteiles 3 ein Gewindebolzen 6 mit seinem einen Endbereich 60 fest eingeschraubt und der Gewindebolzen 6 mit seinem freien Ende 61 durch die Durchgangsbohrung 22 im Montagefalz 20 des Korpus 2 hindurchgesteckt. Über den nunmehr im Inneren des Korpus 2 zum Vorschein kommenden Bereich des Gewindebolzens 6 wird eine Schraubenfeder 7 übergeschoben und eine Mutter 8 auf das freie Ende 61 des Gewindebolzens 6 aufgeschraubt, so daß die Schraubenfeder 7 zwischen dem Montagefalz 20 des Korpus 2 und der Mutter 8 angeordnet und mittels der Mutter 8 durch Kompression gespannt werden kann, bis eine stabile Befestigung des korpusseitigen Scharnierteiles 3 am Montagefalz 20 des Korpus 2 erreicht ist. Die Befestigung des korpusseitigen Scharnierteiles 3 erfolgt somit mittels des Gewindebolzens 6 längs der Achse E des Gewindebolzens 6 und der Sacklochbohrung 30, die senkrecht zur Mittelachse M des als Scharnierzapfen dienenden Bolzens 5 zwischen dem korpusseitigen Scharnierteil 3 und den türblattseitigen Scharnierteilen 4 verläuft.

Wie den Fig. 1 und 4 entnehmbar, ist der in Richtung auf den Korpus 2 abgewinkelte Schenkel S2 der Tür 1 so lang ausgebildet, daß der Schenkel S2 im geschlossenen Zustand der Tür unmittelbar und spaltlos mit seinem vorderen Ende 12 an den Montagefalz 20 des Korpus 2 anschließt. Auch das korpusseitige Scharnierteil 3 schließt in geschlossenem Zustand der Tür 1 bündig mit der Tür 1 und dem Montagefalz 20 ab, so daß zwischen Tür und Korpus kein Spalt mehr vorhanden ist.

An Stelle der Anordnung des korpusseitigen Scharnierteiles 3 in einer Ausnehmung 11 der Tür 1 ist es auch möglich, das korpusseitige Scharnierteil innenliegend in dem von dem Türschenkel S2 und Türblatt S1 gebildeten Eckbereich zwischen Korpus 2 und Tür 1 anzuordnen, wobei bei geschlossener Tür 1 das Scharnier vollständig abgedeckt wird und von der Außenseite her nicht sichtbar ist. Bei dieser innenliegenden Ausführung ist eine durch keine Ausnehmung 11 der Tür unterbrochene spaltlose Dichtungskante 12 zwischen Türschenkel S2 und Montagefalz 20 ermöglicht.

In der dargestellten spaltfreien Anlage des Schenkels S2 der Tür 1 am Korpus 2 gemäß Fig. 4 wäre jedoch bei starrer Befestigung des korpusseitigen Scharnierteiles 3 am Korpus ein Öffnen der Tür 1 ohne Beschädigung der Tür 1 oder Korpus 2 nicht möglich, da dann der vordere Endbereich 12 des Türschenkels S2 entlang der Linie B1 in den Montagefalz 20 des Korpus 2 eindringen müßte, wenn die Tür 1 in Pfeilrichtung P1 geöffnet würde.

Wie sich jedoch in weiteren Einzelheiten auch aus den Darstellungen gemäß den Fig. 5a bis 5c ergibt, ist infolge der bereits beschriebenen federnden Befestigung des korpusseitigen Scharnierteiles 3 am Korpus 2 entlang der Achse E mittels der zwischen der Mutter 8 und dem Montagefalz 20 angeordneten Schraubenfeder 7 das korpusseitige Scharnierteil 3 unter Kompression der Schraubenfeder in Pfeilrichtung P2 längs der Achse E bewegbar. Dies hat zur Folge, daß das korpusseite Scharnierteil 3 beim Öffnen der Tür 1 in Pfeilrichtung P1 vom Montagefalz 20 des Korpus 2 abhebbar ist. Bei einem Öffnen der Tür 1 in Pfeilrichtung P1 und dem dadurch hervorgerufenen Andrücken des vorderen Endes 12 des Schenkels S2 am Montagefalz 20 des Korpus 2 erfolgt eine translatorische Bewegung des korpusseitigen Scharnierteiles 3 in Pfeilrichtung P2, wordurch das Scharnierteil 3, 3a um den Bewegungsspalt BS von dem Montagefalz 20 abgehoben wird. Auf diese weise wird der zum Öffnen und Ausschwenken der Tür, d.h. des Türschenkels S2 erforderliche Bewegungsraum geschaffen, so daß trotz der spaltfreien Anordnung des Schenkels S2 am Korpus 2 ein beschädigungsfreies Öffnen der Tür 1 ermöglicht ist.

Beim erneuten Schließen der Tür 1 wirkt die Rückstellkraft der vormals komprimierten Schraubenfeder 7 entgegen der Pfeilrichtung P2, so daß bei vollständig geschlossener Tür 1 sich die spaltfreie unmittelbare Anlage des Schenkels S2 am Montagefalz 20 des Korpus 2 erneut einstellt. Durch entsprechende Justierung der Aufschraubposition der Mutter 8 auf dem freien Ende 61 des Gewindebolzens 6 kann überdies die Vorspannung der Schraubenfeder 7 in weiten Grenzen beeinflußt werden, so daß einerseits die Rückhaltekraft der Schraubenfeder 7 gegen ein Öffnen der Tür 1 einstellbar ist.

Des weiteren ist, siehe Fig. 5a-c, die Rückhaltefeder 7 abgedichtet unter Zwischenlage einer Dichtung 62 und Scheibe 63 am Korpus 2 abgestützt.

Beim Schließen des Türblattes 1 entgegen Pfeilrichtung P1 preßt sich das vordere Ende des Dichtschenkels 21 des Korpus 2 in ein korrespondierend auf der Innenseite des Türblattes 1 angeordnetes elastisches Dichtungsband 9 ein, so daß eine besonders gute staub- und flüssigkeitsdichte Abdichtung ermöglicht wird.

Erfindungsgemäß wird durch die elastisch federnde Befestigung der Scharniere am Korpus erreicht, daß
1. der abgewinkelte Schenkel S2 der Tür 1 so lang ausgebildet werden kann, daß er spaltlos an den Montagefalz des Korpus anschließt, wodurch ein mechanischer Abschluß Ba nach außen erreicht wird und infolgedessen das Eindringen von Schmutz in die die Scharniere aufnehmende Kohlkammer zwischen Tür und Korpus verhindert wird,
2. eine umlaufende Abdichtung Bi durch Flächenpressung einer elastischen Dichtung umlaufend erzielt wird,
3. die Dichtigkeit der Tür auch bei hohen einwirkenden Drucken dadurch erreicht wird, daß infolge des äußeren spaltfreien Anschlusses der Tür an den Korpus das Eindringen von Schmutz und Feuchtigkeitspartikeln unter hohem Druck vermieden wird.

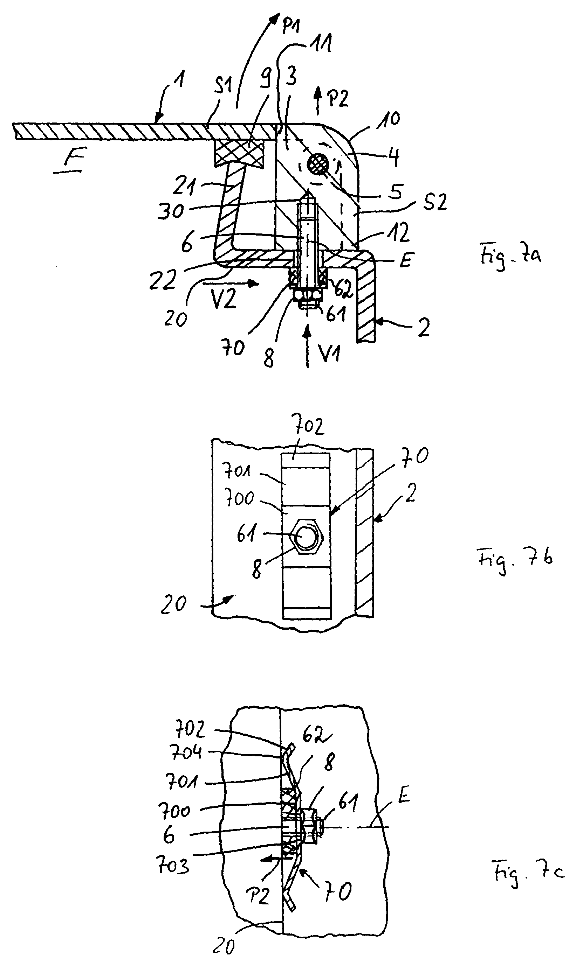

Bei dem in den vorangehend erläuterten Figuren dargestellten Scharnier handelt es sich um eine solche Ausführungsform, die ein Öffnen der Tür 1 in Pfeilrichtung P1 um bis zu 180° ermöglicht. Es ist jedoch auch ohne weiteres möglich, andere Ausführungsformen von Scharnieren, beispielsweise solche mit lediglich 130° Öffnungswinkel in Pfeilrichtung P1 federnd an einem Korpus zu befestigen, um ein Öffnen der Tür 1 zu ermöglichen, was anhand der Fig. 6a bis 6c dargestellt ist.

Hier ist ein einfach aufgebautes Scharnier mit einem korpusseitigen Scharnierteil 3a aus einem gebogenen Flacheisenmaterial vorgesehen, welches mit an der Tür 1 im Bereich des Überganges an dem Türschenkel S2 beispielsweise angeschweißten türblattseitigen Scharnierteilen 4 mittels Scharnierstiften 5 in an sich bekannter Weise zusammenwirkt. Auch bei diesem Ausführungsbeispiel erfolgt die Befestigung des korpusseitigen Scharnierteiles 3a mittels eines einseitig am korpusseitigen Scharnierteil 3a befestigten Gewindebolzen 6, der durch eine Bohrung 22 im Montagefalz 20 des Korpus 2 geführt ist. Auf das im Inneren des Korpus 2 liegende freie Ende 61 des Gewindebolzens 6 ist wiederum eine Schraubenfeder 7 aufgeschoben, die mittels einer aufschraubbaren Mutter 8 spannbar ist, so daß analog zu den vorangehend erläuterten Ausführungsbeispielen das korpusseitige Scharnierteil 3a federnd am Korpus 2 mittels der Schraubenfeder 7 befestigt ist. Auch hierbei liegt das vordere Ende 12 des abgewinkelten Schenkels S2 des Türblattes 1 spaltfrei am Korpus 2 im Bereich des Montagefalzes 20 an. Das hier dargestellte Scharnier ist bei geschlossener Tür 1 gemäß Fig. 6a von außen nicht sichtbar, sondern wird vollständig von den Schenkeln S1 und S2 der Tür 1 abgedeckt.

Bei einem Öffnen der Tür 1 in Pfeilrichtung P1 stützt sich das vordere Ende 12 des abgewinkelten Schenkels S2 der Tür 1 auf dem Montagefalz 20 des Korpus 2 ab und bewirkt eine schräggerichtete Auslenkung des federnd am Korpus 2 befestigten Scharnierteiles 3a in Pfeilrichtung P20, wordurch der Bewegungsspalt BS ausgebildet wird, so daß auch bei diesem Ausführungsbeispiel ein beschädigungsfreies Öffnen der in geschlossenem Zustand spaltfrei am Korpus 2 anliegenden Tür 1 ermöglicht ist. Bei der Schwenkbewegung wird zusammen mit dem Scharnier 3a die hieran befestigte Tür 1 um den Bewegungsspalt BS angehoben, d.h. von dem Montagefalz 20 des Korpus entfernt, wodurch das Einschwenken des Türschenkels S2 in Pfeilrichtung P3 über den Montagefalz 20 ohne Beschädigung ermöglicht ist. Die Öffnungsbewegung der Tür 1 in Pfeilrichtung P1 ist bei diesem in den Fig. 6a bis 6c dargestellten Ausführungsbeispiel auf ca. 130° Öffnungswinkel begrenzt, da beim Erreichen dieses Öffnungswinkels der Türschenkel S2 der Tür 1 am korpusseitigen Scharnierteil 3a anschlägt, siehe hierzu Fig. 6c.

Sowohl das in den Fig. 5a bis 5c dargestellte Scharnier wie auch das in den Fig. 6a bis 6c dargestellte Scharnier stellen hinsichtlich der Ausführung der korpusseitigen Scharnierteile 3 bzw. 3a und der türblattseitigen Scharnierteile 4 und Scharnierzapfen 5 an sich bekannte Ausführungsformen von Scharnieren dar, die jedoch bei konventioneller starrer Befestigung der korpusseitigen Scharnierteile 3, 3a am Korpus 2 bisher stets einen Bewegungsspalt zwischen dem Türschenkel S1 und dem Montagefalz 20 des Korpus in geschlossenem Zustand der Tür 1 benötigten, um ein beschädigungsfreies Öffnen des Türblattes 1 zu ermöglichen. Das bedeutet, daß der Türschenkel S2 stets mit größerem abstand vor dem Montagefalz enden mußte.

Dieser Spalt führte jedoch insbesondere bei Hochdruckreinigung zu Undichtigkeiten, da durch diesen äußeren Bewegungsspalt Schmutz und Wasser eindringen konnten und die innere Dichtung leichter undicht wurde. Mit der nunmehr vorgeschlagenen federnden Befestigung der korpusseitigen Scharnierteile 3, 3a am Korpus 2 ist es nun jedoch möglich, mittels dieser Scharniere auch eine spaltfreie Anlage der geschlossenen Tür 1 am Korpus 2 zu ermöglichen, wobei die Tür 1 ohne Beschädigung in Pfeilrichtung P1 öffenbar ist.

Alternativ zu den vorangehend zwecks federnder Befestigung der korpusseitigen Scharnierteile 3, 3a am Korpus 2 verwendeten Schraubenfeder 7 kann auch eine andersartig ausgebildete Feder verwendet werden, beispielsweise eine Blattfeder, was anhand der Fig. 7a bis 7c dargestellt ist.

Die in diesen Figuren dargestellte Ausbildung der Tür 1, Korpus 2 sowie des Scharniers mit seinen Scharnierteilen 3, 4 und 4 ist mit dem in den Fig. 1 und 5a bis 5c dargestellten Ausführungsbeispiel identisch. An Stelle einer Schraubenfeder 7 zur federnden Befestigung des korpusseitigen Scharnierteiles 3 ist jedoch im vorliegenden Ausführungsbeispiel gemäß Fig. 7a bis 7c eine Blattfeder 70 vorgesehen, mittels derer das korpusseitige Scharnierteil 3 federnd am Korpus 2 befestigt ist. Die Blattfeder 70 weist zu diesem Zweck einen mittleren Bereich 700 auf, an den sich zu beiden Seiten je ein in gleicher Richtung ausgeknickter Schenkel 701 anschließt, dessen jeweiliges freies Ende 702 in entgegengesetzter Richtung abgewinkelt ist. Im mittleren Bereich 700 der Blattfeder 70 ist eine Durchgangsbohrung 703 ausgebildet.

Diese Blattfeder 70 wird nun in der Weise auf dem Montagefalz 20 des Korpus 2 unter Zwischenlage eines Dichtkörpers 62 aufgesetzt, daß die abgewinkelten Schenkel 701 in Richtung auf den Montagefalz 20 weisen und der mittlere Bereich 700 von daher vom Montagefalz 20 beabstandet gehaltert ist. Die Blattfeder liegt dabei lediglich mit einem mit 704 gekennzeichneten Bereich zwischen den abgewinkelten Schenkeln 701 und ihren jeweiligen in entgegengesetzter Richtung abgewinkelten Enden 702 auf dem Montagefalz 20 auf. Die Befestigung des korpusseitigen Scharnierteiles 3 erfolgt dadurch, daß der einseitig in das korpusseitige Scharnierteil 3 in dessen Sacklochbohrung 30 eingeschraubte Gewindebolzen 6 mit seinem freien Ende 61 durch die Durchgangsbohrung 22 im Korpus 2 und die im mittleren Bereich 700 der Blattfeder 70 ausgebildete Durchgangsbohrung 703 hindurchgeführt wird. Sodann kann auf das freie Ende 61 des Gewindebolzens 6 wiederum eine Mutter 8 aufgeschraubt werden, bis diese am mittleren Bereich 700 der Blattfeder 70 zur Anlage kommt.

Bei einer Öffnen der im geschlossenen Zustand spaltfrei am Korpus anliegenden Tür 1 ist somit eine translatorische Beweglichkeit des Scharnierteiles 3 entlang der Längsachse E des Gewindebolzens 6 in Pfeilrichtung P2 ermöglicht, da die Blattfeder 70 in dieser Pfeilrichtung P2 elastisch nachgiebig ist. Somit kann auch bei Verwendung der in den Fig. 7a bis 7c dargestellten Blattfeder 70 ein beschädigungsfreies Öffnen der in geschlossenem Zustand spaltfrei am Korpus 2 anliegenden Tür 1 erfolgen. Ebenso ist es, wie schon bei dem Ausführungsbeispiel mit Schraubenfeder 7, auch hierbei ermöglicht, über eine Verstellung der Aufschraubposition der Mutter 8 die Vorspannung der Blattfeder in weiten Grenzen zu variieren.

## Patentansprüche

1. Anordnung zur Befestigung einer Tür zum Verschließen einer Öffnung an einem Korpus, insbesondere einem Gehäuse aus Metallblechen, vorzugsweise Edelstahlblechen, mittels mindestens eines Scharnieres, das einen am Korpus befestigbaren korpusseiten Scharnierteil und mindestens einen an der Tür befestigbaren türblattseitigen Scharnierteil aufweist, die über einen Scharnierzapfen schwenkbar miteinander verbindbar sind, **dadurch gekennzeichnet**, daß das korpusseitige Scharnierteil (3, 3a) federnd am Korpus (2) befestigt ist.

2. Anordnung nach Anspruch 1,
**dadurch gekennzeichnet**, daß das korpusseitige Scharnierteil (3, 3a) gegen die Rückstellkraft der Federkraft der federnden Befestigung translatorisch beweglich ist und beim Öffnen der Tür vom Korpus um einen Bewegungsspalt (BF) abhebbar ist.

3. Anordnung nach Anspruch 1 oder 2,
**dadurch gekennzeichnet**, daß die Tür (1) entlang ihres Umfanges einen gegenüber der Türblattfläche (S1) rechtwinklig auf den Korpus weisenden abgewinkelten Türschenkel (S2) aufweist und der Korpus (2) an seiner der Tür (1) zugewandten die mittels der Tür zu verschließende Öffnung (F) bildenden Seite einen parallel zur Tür verlaufenden Montagefalz (20) aufweist, an dessen freien Ende sich ein in Richtung auf die Tür (1) abgewinkelter Dichtschenkel (21) anschließt und in dem zwischen Montagefalz (20), Dichtschenkel (21) und dem Türschenkel (S2) gebildeten Eckbereich eine Hohlkammer zur Aufnahme der Scharnierteile gebildet ist.

4. Anordnung nach einem der Ansprüche 1 bis 3,
**dadurch gekennzeichnet**, daß an der Innenseite des Türblattes (S1) ein elastisches Dichtband (9) aufgebracht ist, in das der Dichtschenkel (21) im geschlossenen Zustand der Tür unter Ausübung eines Anpreßdruckes eingreift, wodurch eine staub- und flüssigkeitsdichte innere dichtende Barriere (Bi) geschaffen ist.

5. Anordnung nach einem der Ansprüche 1 bis 4,
**dadurch gekennzeichnet**, daß der in Richtung auf den Korpus (2) abgewinkelte äußere Türschenkel (S2) der Tür so lang ausgebildet ist, daß der Schenkel (S2) im geschlossenen Zustand der Tür unmittelbar und spaltlos mit seinem vorderen Ende an den Montagefalz (20) des Korpus (2) anschließt, wodurch eine äußere mechanische Barriere (Ba) gegen Eindringen von Schmutz und Feuchtigkeitspartikeln von außen in die Hohlkammer zwischen Tür und Korpus verhindert ist.

6. Anordnung nach einem der Ansprüche 1 bis 5,
**dadurch gekennzeichnet**, daß das korpusseitige Scharnierteil (3, 3a) entlang einer senkrecht zur Mittelachse (M) des Scharnierzapfens (5) verlaufenden Achse (E) federnd befestigt ist.

7. Anordnung nach einem der Ansprüche 1 bis 6,
**dadurch gekennzeichnet**, daß zur federnden Befestigung des korpusseitigen Scharnierteiles (3, 3a) eine Feder vorgesehen ist.

8. Anordnung nach Anspruch 7,
**dadurch gekennzeichnet**, daß die Feder als Schraubenfeder (7) ausgebildet ist.

9. Anordnung nach Anspruch 7,
**dadurch gekennzeichnet**, daß die Feder als Blattfeder (70) ausgebildet ist.

10. Anordnung nach einem der Ansprüche 1 bis 9,
**dadurch gekennzeichnet**, daß das korpusseitige Scharnierteil (3, 3a) längs einer Achse (E), ausgehend von seiner als Anlagefläche (31) am Korpus (2) dienenden Seite, eine mit einem Gewinde versehene Sacklochbohrung (30) aufweist, in die ein Gewindebolzen (6) einseitig eingeschraubt ist und der Gewindebolzen (6) durch eine Öffnung (22) im Korpus (2) hindurchführbar ist und am freien Ende (61) des Gewindebolzens (6) zwischen einer auf das freie Ende (61) aufschraubbaren Mutter (8) und dem Korpus (2) die Schraubenfeder (7) oder Blatter (70) für die federnde Befestigung des korpusseitigen Scharnierteiles (3, 3a) angeordnet ist.

11. Anordnung nach einem der Ansprüche 1 bis 10,
**dadurch gekennzeichnet**, daß das korpusseitige Scharnierteil (3, 3a) in eine entsprechende Ausnehmung (11) der Tür (1) und des Türschenkels (S2) einpaßbar ist, dergestalt, daß in geschlossenem Zustand der Tür (1) diese bündig mit dem korpusseitigen Scharnierteil (3, 3a) abschließt und unmittelbar am Korpus (2) anliegt.

12. Anordnung nach einem der Ansprüche 1 bis 11,
**dadurch gekennzeichnet**, daß mittels der Feder (7,70) ein Anpreßdruck der Tür (1) auf den Korpus (2) erzeugbar ist.

13. Anordnung nach Anspruch 10,
**dadurch gekennzeichnet**, daß die Feder (7) auf ihrer an dem Montagefalz (20) des Korpus (2) anliegenden Seite unter Zwischenlage einer Dichtung (62) abgestützt ist.
